# EUROPEAN PATENT SPECIFICATION

(11) **EP 2 711 206 B1**
(45) Date of publication and mention of the grant of the patent: **26.08.2015**
(21) Application number: 12185892.2
(22) Date of filing: 25.09.2012
(51) Int. Cl.: B60C 25/138, B60C 25/05, F16C 27/00, G01M 1/04, G01M 1/28

(54) **Apparatus for servicing vehicle wheels**
Vorrichtung zur Wartung von Fahrzeugrädern
Appareil pour l'entretien des roues de véhicule

(43) Date of publication of application: 26.03.2014
(73) Proprietor: Snap-on Equipment Srl a unico socio, 42015 Correggio (RE) (IT)
(72) Inventor: Sotgiu, Paolo, 41125 MODENA (IT)
(74) Representative: Eisenführ Speiser

(56) References cited:
- DE-A1- 3 716 210
- DE-A1- 4 342 667
- DE-A1-102004 056 367
- US-A- 5 385 045

## Description

The invention concerns an apparatus for servicing vehicle wheels including a wheel balancing device and a tire changing device.

Such an apparatus is known from US Pat. No. 5,385,045. The known apparatus has a spindle shaft which is used to assemble and disassemble a tire by means of tire changer tools and to measure forces created by an unbalance of the vehicle wheel. The unbalance measuring means include force transducers which are operatively connected to the spindle shaft. The vehicle wheel is driven by hand or by an additional motor, for instance by a frictional motor. During the assembling of the tire to the wheel rim and the disassembling of the tire from the wheel rim, strong forces are applied to the tire and the wheel rim which are mounted on the spindle shaft. The transducers which measure the forces created by an unbalance of the vehicle wheel are operatively connected to the spindle shaft and therefore the forces applied during the assembling and disassembling of the tire can act onto the force transducers via the spindle shaft and influence the transducer sensitivity.

German laid open document 10 2004 056 367 discloses a method and an apparatus for determining unbalances and non-uniformities of rotating bodies, like a vehicle wheel. The apparatus includes a shaft for rotatably accommodating the vehicle wheel. The shaft is supported by a carrier plate which is pivotable about an axis perpendicular to the axis of rotation of the shaft. Sensors are provided for detecting oscillation of the shaft and the supporting plate. On the basis of the counter-forces generated by said oscillation, imbalances and non-uniformities of the vehicle wheel may be determined.

It is an object of the invention to provide an apparatus for servicing vehicle wheels including a wheel balancing device and a tire changing device where the forces applied by the tire changer tools do not interfere with the function of the unbalance measuring means.

The problem is solved by an apparatus comprising the features of claim 1. The appendant claims recite advantageous modifications of the invention.

The invention provides an apparatus for servicing vehicle wheels including a wheel balancing device and a tire changing device. The apparatus comprises a spindle shaft which is rotatably supported on a machine frame. The spindle shaft is adapted for mounting and dismounting a tire/rim assembly or a wheel rim of a vehicle wheel on it or from it. Unbalance measuring means are operatively connected to the spindle shaft and the unbalance measuring means have an unbalance measuring direction in which forces created by an unbalance of the tire/rim assembly or by the wheel rim are detected.

Tire changer tools are supported on the machine frame and adapted to assemble a tire onto a rim and to disassemble the tire from the rim, wherein the rim is mounted on the spindle shaft. Spindle supporting means support the spindle shaft on the machine frame with a rigid structure in a force acting range in which forces are created between the respective tire changer tool and the tire during the assembling or the disassembling of the tire onto the wheel rim or from the wheel rim. Tool supporting means support the tire changer tools on the machine frame within said force acting range which is arranged outside of said unbalance measuring direction.

Drive means are designed to drive the spindle shaft within a range of rotational speed and with a torque adapted for assembling and disassembling the tire and for measuring the forces created by an unbalance of the tire/rim assembly or of the wheel rim as well.

The invention provides an apparatus in which the sensitivity of the force transducers which measure the forces created by an unbalance are not influenced, because the force acting range of forces acting during the assembling and disassembling of the tire on the spindle shaft is outside of the spatial unbalance measuring area within which the force transducers are sensitive for the detection of unbalance forces which are considerably smaller than the forces applied by the tire changer tools. Furthermore, the invention provides drive means for the spindle shaft and control means for controlling the drive means to provide a low speed, for instance 5 to 10, especially 7 rpm, and an appropriate torque, for instance 1500Nm, for the tire assembling and disassembling operation, and a higher speed, for instance 60 to 80 rpm, especially 70 rpm, for the unbalance measurement. The spatial unbalance measuring area can be the measuring direction of at least one force measuring transducer, a plane within which the measuring directions of at least two force transducers are placed, wherein the measuring direction are parallel or angular, especially perpendicular to each other, or a projection of such a plane in an equatorial plane of the tire/rim assembly or of the rim.

According to an embodiment of the invention, the spindle supporting means can include spring elements which are connected with its one ends to the machine frame and with its other ends to a spindle bearing in which the spindle shaft is rotatably supported.

According to another embodiment, the spindle shaft is supported on the machine frame via the force transducers which measure the forces created by an unbalance of the tire/rim assembly or by the wheel rim.

The unbalance measuring direction and the direction of forces created between the tire changer tool and the tire can extend along lines which cross the spindle shaft.

The invention will be explained furthermore by the description of the embodiments which are shown in the drawings.
- Figure 1: shows a general view of an inventive embodiment;
- Figures 2 to 9: show different embodiments of spindle supporting means which can be used in the inventive apparatus, especially in the embodiment of Figure 1.
- Figure 10: shows a block diagram of the electric control circuit for controlling the electric motor of the embodiments, and the movement of the tire changer tools; and
- Figure 11: shows in a schematic plan view the force acting range within the directions of forces created between the tire changer tools and the vehicle wheel extend and the imbalance measuring direction.

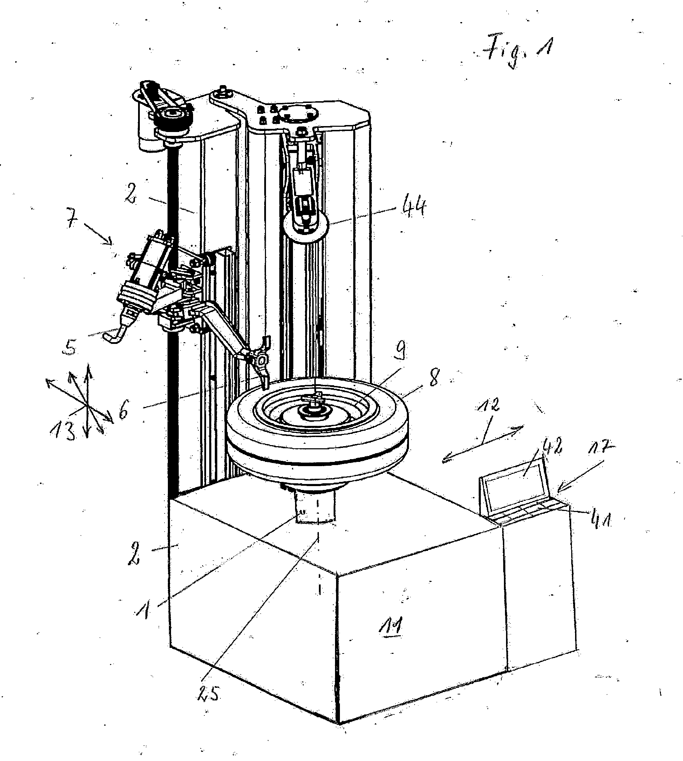

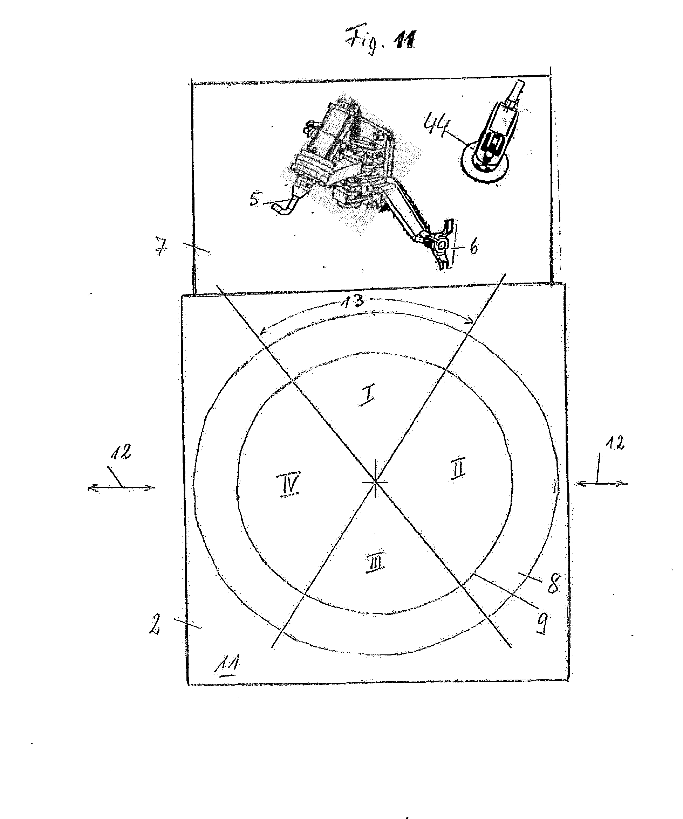

The apparatus shown in Figure 1 includes a tire changing device 7 provided with tire changer tools including mounting/demounting tools 5 and 6 and debeading tools (one debeading tool 44 is shown) which are supported movably on a pillar which is a part of a machine frame 2. The movements of the tire changer tools 5, 6 and 44 are controlled in a known manner during the assembling and disassembling of a tire 8 onto or from a wheel rim 9. The tire changer tools 5, 6 and 44 can be controlled to perform substantially movements perpendicularly and parallel with respect to a shaft axis 25, as will be explained below in conjunction with Figure 11.

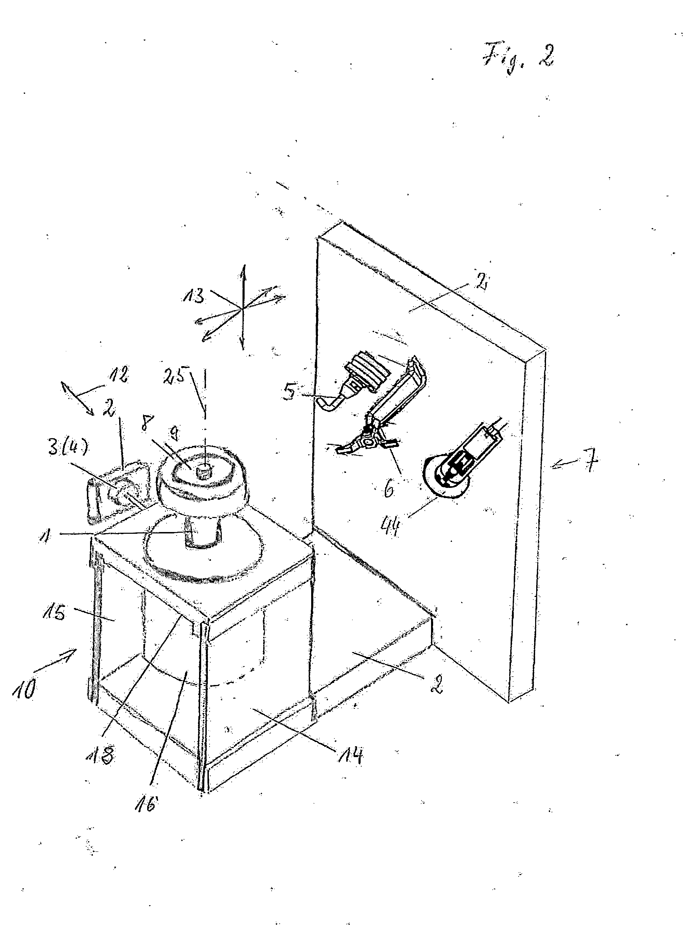

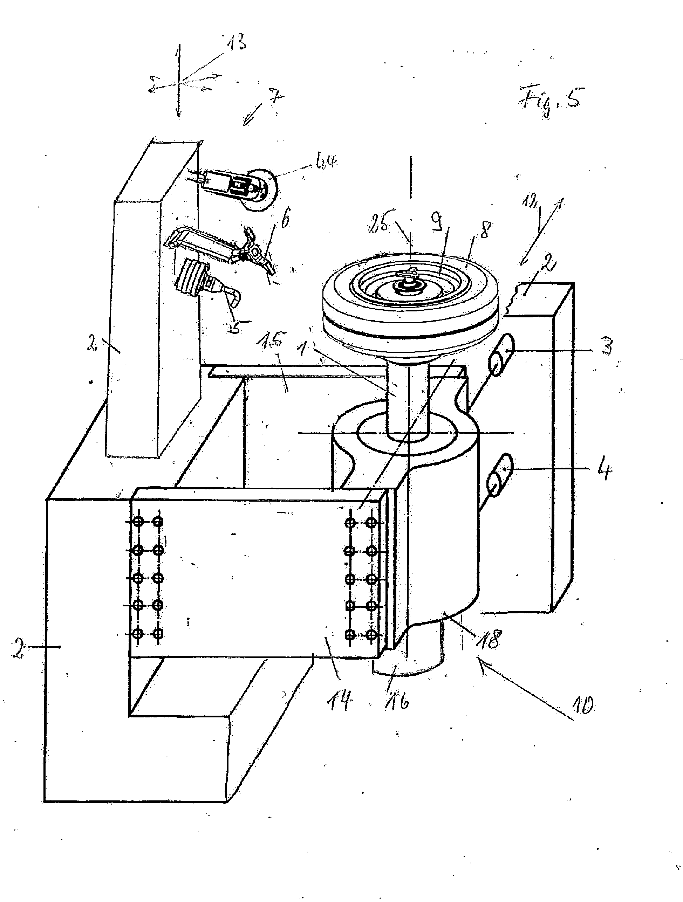

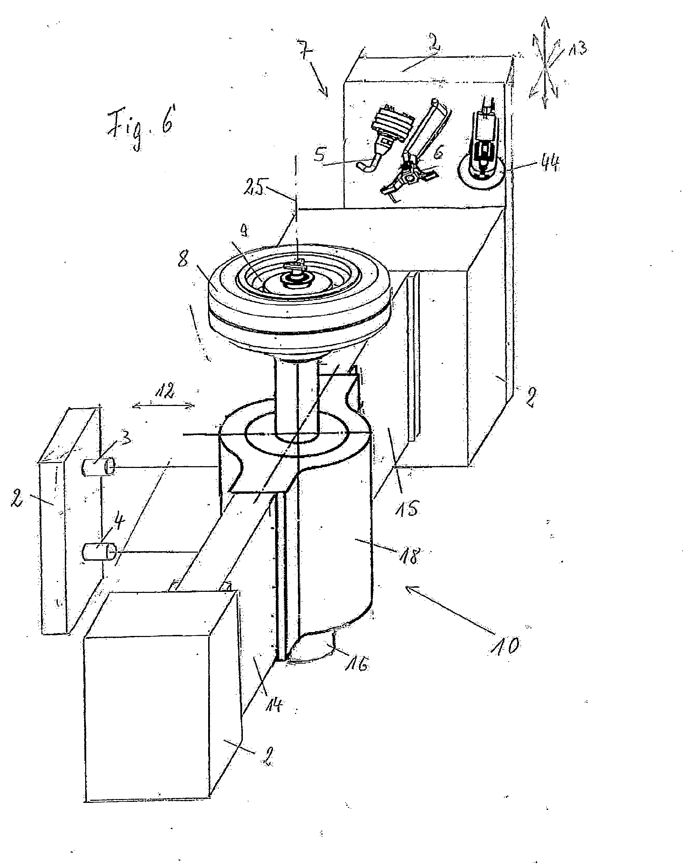

The tire/rim assembly forms a vehicle wheel. The vehicle wheel or the wheel rim 9 can be mounted on a spindle shaft 1 or can be dismounted from the spindle shaft 1. The spindle shaft 1 is rotatably supported in a housing 11 which can be another part of the machine frame 2 or on a part of the machine frame placed within the housing 11. The spindle shaft 1 is supported by spindle supporting means 10 within the housing 11. Appropriate spindle supporting means are shown in the Figures 2 to 6 which will be explained below.

Unbalance measuring means which include preferably force transducers 3, 4 (Fig. 2 to 9) are arranged within the housing 11. The unbalance measuring means are operatively connected to the spindle shaft 1 for detecting forces which are created by an unbalance of the vehicle wheel or of the wheel rim 9. The measuring direction, i.e. the detecting sensitivity of the force transducers 3, 4 is different to or outside of a force acting range within which forces are generated from the tire changer tools 5, 6 and 44 working on the tire 8 during the tire assembling or disassembling process, as will be explained in detail in conjunction with the explanation of the embodiments illustrated in the Figures 2 to 9.

The measuring direction of the unbalance measuring means is shown schematically by the arrow 12 and the force acting range of the tire changer tools is shown schematically by the arrows 13 in the Figures 1 and 11. The angle between these directions can be 80° to 100°, especially about 90°. The force range of the forces acting during the tire changing produce can include force directions within the angle range of 80° to 100° or larger range. The forces which are applied by the tire changer tools 5, 6 and 44 can extend substantially parallel and perpendicularly with respect to the shaft axis 25, as shown by arrows 13. The schematic plan view illustrates sectors I and III (force acting range) within which directions of forces acting during the tire changing procedure between the tire changing tools 5,6 and 44 and the tire 8 extend. The imbalance measuring direction (arrows 12) extends outside of said force acting range 13 and is positioned within the sectors II and IV,

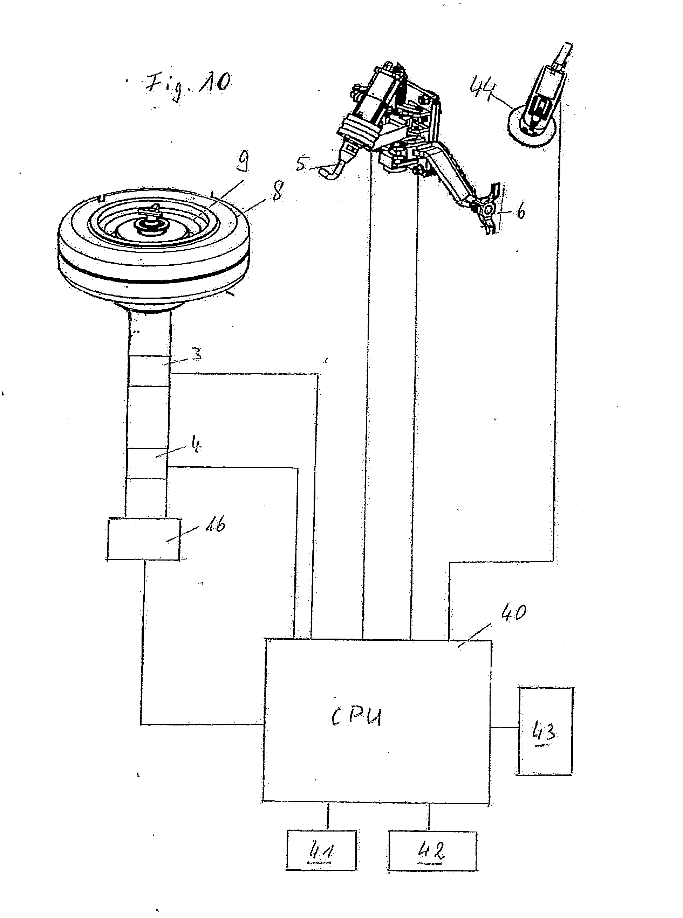

The apparatus of Figure 1 may be equipped additionally with a panel 17 including display means 42 and a key set 41. An electric control device according to the block diagram of Figure 10 can be provided within the panel housing or without the housing 11.

In Figure 2, the spindle supporting means 10 can include spring elements in form of a pair of flat springs 14, 15 which supports the spindle shaft 1 in a vertical arrangement. That flat springs 14, 15 are arranged parallel to each other and with respect to the shaft axis 25. The lower horizontal ends of the vertically extending flat springs 14, 15 are fixed to the machine frame 2 and the upper horizontal ends of the flat springs 14, 15 are fixed to a spindle bearing 18 which supports rotatably the spindle shaft 1. The spindle shaft 1 is driven by an electric motor 16 which can be fixed to the spindle bearing 18. The electric motor 16 can be driven in controlled manner for performing tire assembling and disassembling or for unbalance measurement, as recited before. One or two force transducers 3, 4 are supported on the machine frame 2 for the detection of forces created by an unbalance of the tire/rim assembly 8, 9 or of the wheel rim 9. The measuring direction (arrow 12) of the force transducer 3(4) extends perpendicularly with respect to the surfaces of the flat springs 14, 15. In the measuring direction of the transducer, the flat springs 14, 15 have elastic properties which allow a force measurement of the transducer 3(4).

In a direction parallel to its surfaces, especially in a horizontal direction, the flat springs 14, 15 have rigid properties. Forces which are applied by the tire changer tools 5, 6 and 44 onto the tire 8 and/or the wheel rim 9 during the tire assembling and disassembling procedure are acting on the spindle shaft 1 and the spindle bearing 18 mainly parallel (arrow 13) to the surfaces of the flat springs 14, 15 and are guided via the flat springs 14, 15 into the machine frame 2 without influencing the force transducer 3(4). The measuring direction (arrows 12) of the transducer 3(4) is outside the force acting range (arrows 13) of the tire changer tools.

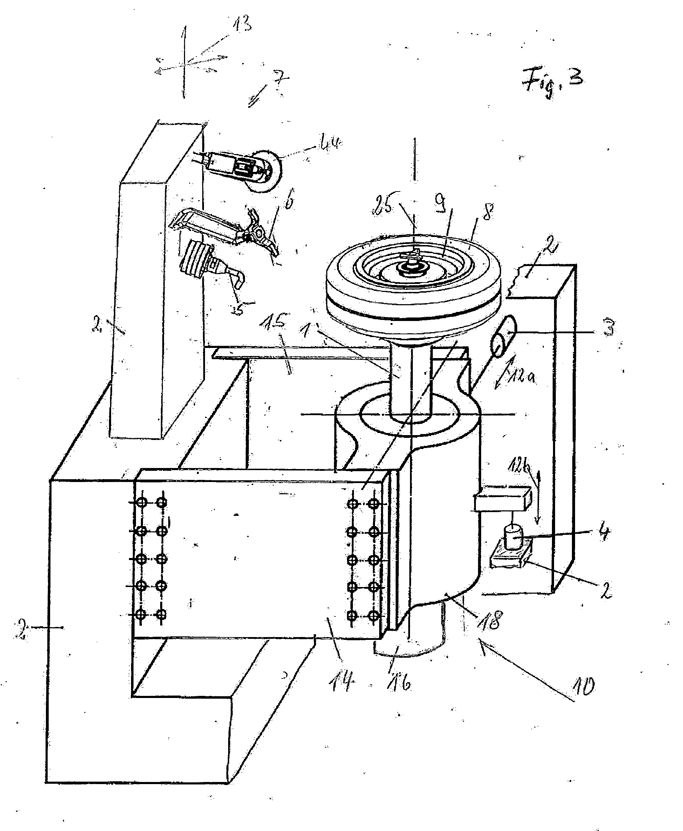

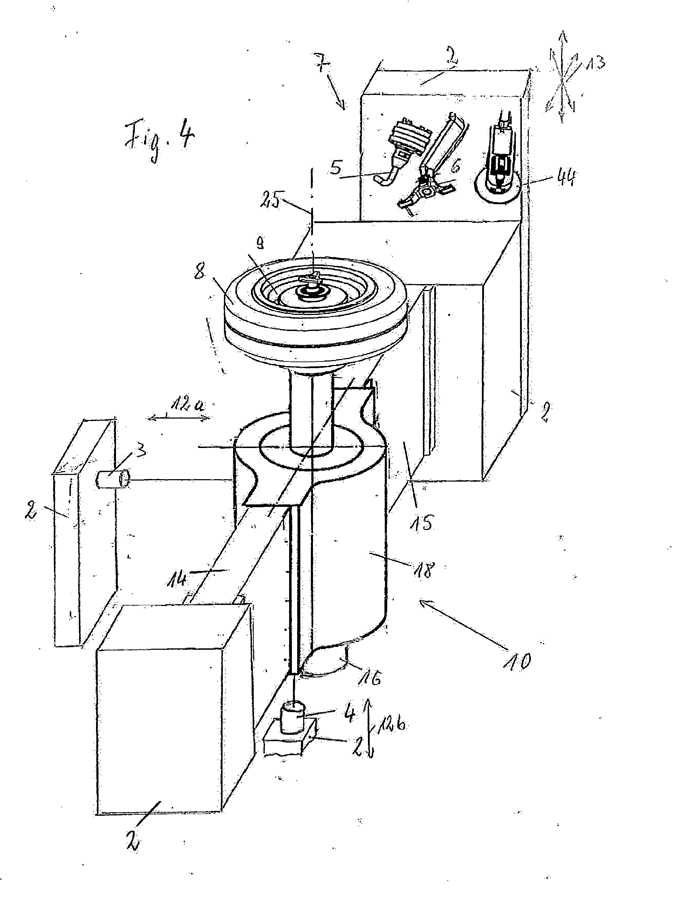

In the embodiments of the Figure 3 and 4, the spindle supporting means 10 contain a spindle bearing 18 which constitutes a rotary bearing for the spindle shaft 1 which is driven by the electric motor 16. The spindle bearing 18 is supported by means of plate like spring elements 14, 15 on the machine frame 2. The spindle bearing and the spindle shaft 1 are positioned vertically. The one vertical ends of the spring elements 14, 15 are fixedly connected to the machine frame 2 and the other vertical ends of the spring elements 14, 15 are fixedly connected to the spindle bearing 18. The force transducers 3, 4 are arranged between the machine frame 2 and the spindle bearing 18. The elastic properties of the spring elements 14, 15 permit a force measurement of the force transducer 3, in a horizontal measuring direction (arrow 12a) perpendicular with respect to the shaft axis 25 and a force measurement of the force transducer 4 in a measuring direction substantially parallel to the shaft axis 25 (arrow 12b) during the unbalance measurement. In the embodiment of Figure 3, the platelike spring elements 14, 15 extend parallel to each other, and in the embodiment of Figure 4, the platelike spring elements 14, 15 extend in alignment to each other.

The tire changer tools 5, 6 and 44 of the tire changing device 7 can be mounted on the machine frame 2 in the same manner as shown in Figure 1. The force acting range of the tire changer tools 5, 6 and 44 extends with respect to the spindle axis 25 in an angle range which does not include the measuring directions of the force transducers 3, 4. The arrows 13 illustrated schematically the force acting range of the tire changer tools 5, 6 and 44.

In a direction parallel to its surfaces, especially in a horizontal direction, the flat springs 14, 15 have rigid properties. Forces which are applied by the tire changer tool 5, 6 and 44 onto the tire 8 and/or the wheel rim 9 during the tire assembling and disassembling procedure are acting on the spindle shaft 1 and the spindle bearing 18 mainly parallel (arrows 13) to the surfaces of the platelike springs 14, 15 and are guided via the platelike springs 14, 15 into the machine frame 2 without influencing the force transducers 3, 4. The measuring directions (arrows 12a, 12b) of the transducers 3, 4 are outside the force acting range (arrows 13) of the tire changer tools 5, 6 and 44.

The embodiments illustrated in the figures 1 to 8 show vertical machine types with verticals arranged spindle shafts 1. The vehicle wheel may be mounted on the spindle shaft 1 with the inner wheel side in upward position to facilitate the placement of balancing procedure. It is possible to realize the invention on a horizontal machine type with horizontal spindle shaft as well.

In the embodiments of the Figures 2 to 6, the spindle supporting means 10 have platelike or flat spring elements 14, 15 with which the spindle bearing 18 is supported on the machine frame 2. It is possible, however, to use spring elements in the shape of a rectangle frame, wherein respective opposite frame pieces are fixedly connected to the machine frame 2 and to the spindle bearing 18. Such spring elements are known from DE 37 16 210 C2.

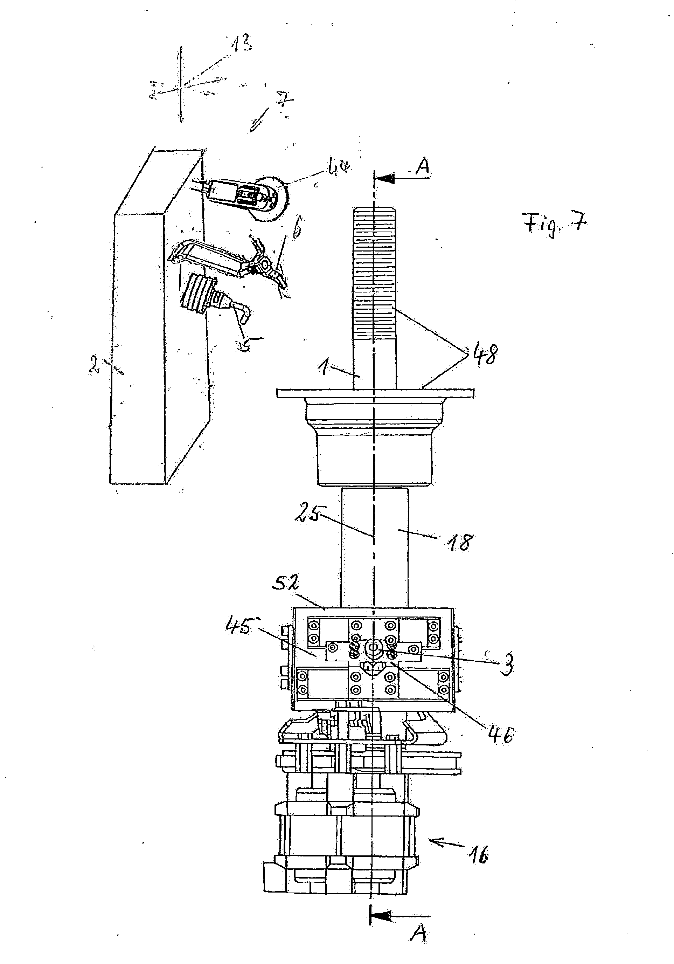

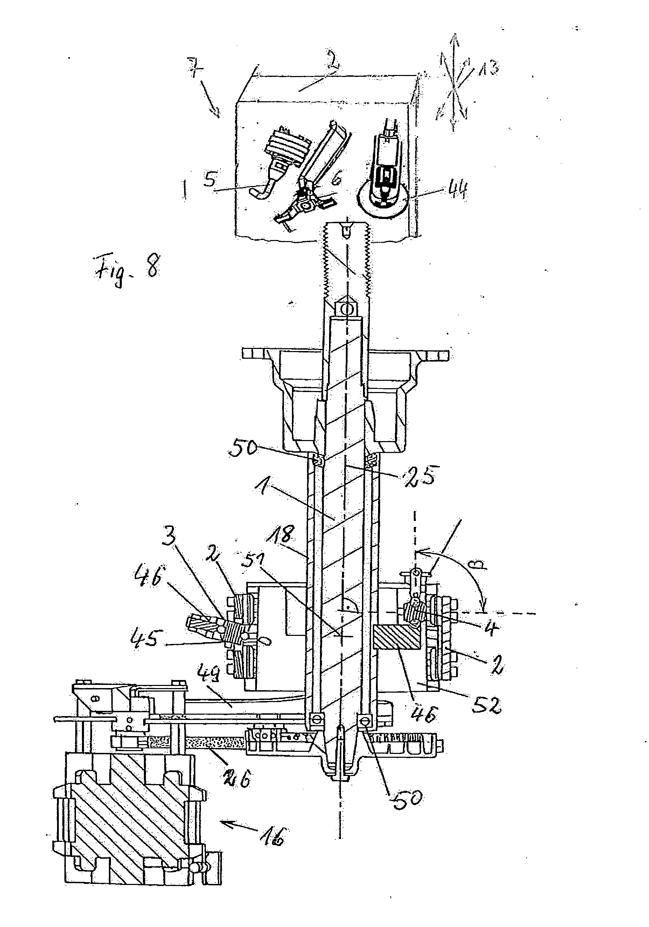

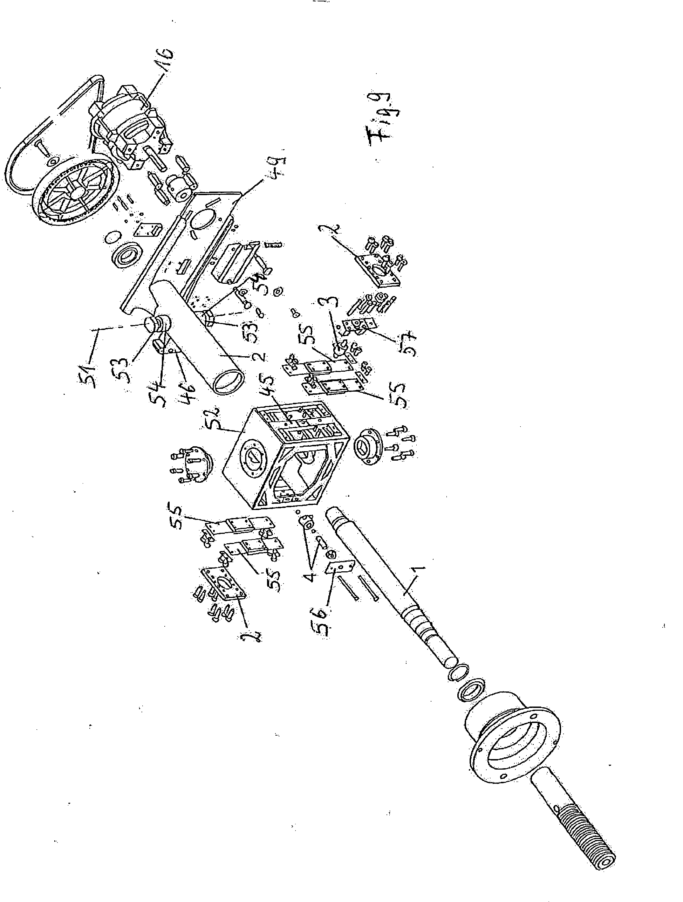

The embodiment shown in the Figures is 7 to 9 includes a measuring device for measuring forces, especially centrifugal forces which are generated by an imbalance of a rotor 9 and the tire changing device 7, which are mounted on the machine frame 2. The Figures show parts of the machine frame 2 or parts which are rigidly connected to the machine frame 2. Those parts are provided with the reference sign "2". The figure 8 is a sectional view along the section line A-A in Figure 7 and Figure 9 is an explosive view showing the component of the measuring device.

The measuring device comprises a first bearing 4 in form of a tube which establishes the spindle bearing 18 shaft 1 rotatably mounted about its shaft axis 25. For this, the spindle shaft 1 is supported by means of roller bearings 50 within the tube-shaped spindle bearing 18. The spindle shaft 1 has in the region of its free end mounting means 48 which can be designed in known manner for attachment of the rotor, especially the vehicle wheel.

A second bearing 52 for the spindle shaft 1 has a rigid frame structure and supports pivotally the spindle bearing 18 about a pivot axis 51 (Figures 8). The pivot axis 51 is generated by spring means consisting of two torsion springs 53. The torsion springs 53 are formed on mounting bolts 54 which are rigidly connected to the first spindle bearing 18 and to the second bearing 52. The mounting bolts 54 extend diametrically from the surface of the tubular spindle bearing 2. The one ends (inner ends) of the mounting bolts 54 are connected to the spindle bearing 18 and the other ends (outer ends) of the mounting bolts 54 are connected to the second bearing 52. The torsion springs 53 are established by reduced diameters of the mounting bolts 54 between the inner and the outer ends of the mounting bolts 54. The torsion springs 53 are arranged with respect to the spindle shaft 1 such that the shaft axis 25 extends in the middle between the torsion springs 53 and the pivot axis 51 intersects the shaft axis 25 in a perpendicular angle.

The second bearing 52 is supported on the machine frame 2 in a manner that a force measurement between the spindle shaft 1, particularly the second bearing and the machine frame 2 is possible. For this, the second bearing 52 of the spindle shaft 1 is supported preferably by means of spring means which have the configuration of plate springs 55. The plate springs 55 are placed on both sides of the shaft 1 and extend parallel to each other and perpendicularly with respect to the shaft axis 8. The plate springs on the both sides of the spindle shaft 1 have equal distance from the shaft axis 25. The both ends of the plate spring 55 are rigidly, for instance by means of screw connections, connected to the frame structure of the second bearing 52. The plate springs 55 are rigidly, for instance by means of screw connections, connected in the middle of the extensions to the machine frame 2 or to respective parts of the stationary frame.

The specific arrangement of the spring means 53 and 55 enables that the spindle shaft 1 can perform displacements in two degrees of freedom, namely a rotation about the pivot axis 51 and a translatory motion with respect to the machine frame 2. The directions of the two displacements extend in one plane which passes through the shaft axis 25.

The rotary and translatory displacements of the spindle shaft 1 are measured by force sensors having measuring directions within the one plane in which extend the displacement directions of the spindle shaft 1. The force sensor transducer 4 forces generated by unbalance of the rotating rotor 9 and acting about the pivot axis 12. The other force transducer 3 measures forces generated by the unbalance of the rotating rotor and acting on the spindle shaft 1 and on the second bearing 52 in a direction intersecting the shaft axis 25.

The force transducer 4 is positioned and tensioned between the spindle bearing 18 and the second bearing 52. The measuring direction of the force transducer 4 is inclined with a specific angle β with respect to a direction perpendicular to the shaft axis 25, wherein the angle β is determined in a range from 80° to 100°, preferably from 85° to 95°. In the illustrated embodiment, the angle β is determined to about 90°, namely, in the illustrated embodiment the measuring direction of the force transducer 4 extends parallel to the shaft axis 25. The rotary displacements of the spindle shaft 1 are transmitted by a lever 46 which is rigidly fixed to the tubular spindle bearing 18. The rotary displacement of the spindle shaft 1 is transmitted via the roller bearings 50 which are positioned at the ends of the spindle bearing 18 to the first bearing 2 and via the lever 46 onto the one end of the force transducer 4. For this transmitting movement the lever 46 rotates about the pivot axis 51. The lever 46 extends along the one plane in which the measuring directions of the force transducers 3, 4 lie and extend perpendicularly with respect to the shaft axis 25. The other end of the force transducer 4 is rigidly supported on the second bearing 52 by means of a support plate 22 screwed with the second bearing 52.

The force transducer 3 is at its one end in force transmitting manner connected to a middle side portion 45 of the second bearing 52. The middle side portion 45 extends parallel to the plate springs 55 on the same side of the second bearing 52. The other end of the force transducer 3 is supported on a support bracket 57 which is rigidly connected, preferably by means of screw connections with the machine frame 2 or a respective part of the machine frame. The measuring direction of the force transducer 3 is inclined by a specific angle α with respect to the shaft axis 25. The angle α can be determined in a range from 60° to 120°, for example from 65° to 115°, especially 70° to 110°. In the illustrated embodiment, the angle α is determined to about 75°.

A support member 49 is rigidly connected to the spindle bearing 18. The support member 49 supports the electric motor 16, and a belt drive 26 (Fig.8) which transmits the motor torque onto the spindle shaft 1.

The measuring directions of the force transducers 3, 4 extends substantially in a plane which goes through the shaft axis 25 of the spindle shaft1.

The tire changer tools 5, 6 can be arranged in the apparatus as illustrated in Figure 1 and extends perpendicularly with respect to the drawing plane of the Figure 7 and parallel to the drawing plane of the Figure 7 and 8. The force acting range of the tire changer tools extends outside of the measuring directions of the force transducers 3, 4 and can have around the shaft axis 25 an angle of 80° to 100°, especially 90° with respect to the plane within which the measuring directions of the force transducers 3, 4 are placed.

The drive means for driving the spindle shaft 1 includes the electric motor 16 which can include an integrated gear transmission to provide the respective speed and torque for performing the unbalance measurement and the tire changing process, but the electric motor 16 can apply the torque to the spindle shaft via a separate gear transmission as well. The drive means can include the belt drive 26, as shown in the Figure 8 for transmitting the torque of the motor 16 to the spindle shaft 1. Furthermore, the power supplied to the electric motor 16 can be controlled to provide the needed torques and speeds for performing the unbalance measurement and the tire changing procedure.

A block diagram of an electric / electronical device for controlling the electric motor 16 and the movements of the tire changer tools 5, 6 and 44 is shown in Figure 10. The control device includes a control processing unit 40 which controls the electric current which is delivered to the electric motor 16 from a power source 43 in dependence of the operation which the apparatus of the Figure 1 should perform. During the tire changing process, the movement and the operation of the respective tire changer tool 5, 6 and 44 is controlled by the control processing unit 40, wherein the needed power is delivered from the power source 43. During the unbalance measurement, the force transducers 3, 4 delivers the measured force data to the control processing unit for the calculation of the balancing weights applied to the vehicle wheel (tire/rim assembly 8, 9). The respective operation of the apparatus can be adjusted by means of the key set 41 connected to the control processing unit 40 and by the display means 42, which are connected as well to the control processing unit 40. The operation can be over-viewed and the results of the operations can be illustrated.

### List of Reference Signs

- 1: spindle shaft
- 2: machine frame
- 3: force transducer
- 4: force transducer
- 5: mounting/demounting
- 6: mounting/demounting
- 7: tire changing device
- 8: tire
- 9: wheel rim
- 10: spindle supporting means
- 11: housing
- 12: unbalance measuring direction
- 13: force acting range
- 14: spring element
- 15: spring element
- 16: electric motor
- 17: panel
- 18: spindle bearing
- 19: roller bearing
- 20: roller bearing
- 21: frame element
- 22: frame element
- 23: tensioning member
- 24: tensioning member
- 25: shaft axis
- 26: belt drive
- 27: intermediate frame
- 28: support lever
- 29: support lever
- 30, 31: flexible end joints
- 32, 33: flexible end joints
- 34.: support lever
- 35.: support lever
- 36, 37: flexible end joints
- 38, 39: flexible end joints
- 40: central processing unit
- 41: Key set
- 42: display means
- 43: power source
- 44: debeading tool
- 45: middle side portion
- 46: lever
- 47: support plate
- 48: mounting means
- 49: support member
- 50: roller bearings
- 51: pivot axis
- 52: second bearing
- 53: torsion spring
- 54: mounting bolts
- 55: plate springs
- 56: support plate
- 57: support bracket

## Claims

1. Apparatus for servicing vehicle wheels including a wheel balancing device and a tire changing device, comprising:
- a spindle shaft (1) rotatably supported on a machine frame (2),
wherein the spindle shaft (1) is adapted for mounting and dismounting a tire/rim assembly or a wheel rim of a vehicle wheel on it or from it;
- unbalance measuring means (3, 4) operatively connected to the spindle shaft (1),
wherein the unbalance measuring means (3, 4) have at least one unbalance measuring direction (12, 12a, 12b) in which forces created by an unbalance of the tire/rim assembly (8, 9) or by the wheel rim (9) are detected;
- tire changer tools (5, 6 and 44) supported on the machine frame (2) and arranged to assemble a tire onto a rim and to disassemble the tire from the rim, wherein the rim is mounted on the spindle shaft (1);
- drive means designed to drive the spindle shaft (1) within a range of rotational speed and torque adapted for assembling and disassembling the tire or for measuring forces created by an unbalance of the tire/rim assembly or of the wheel rim;
**characterized by**
- spindle supporting means (10) supporting the spindle shaft (1) on the machine frame (2) and having rigid properties in a force acting range (13), within which forces are created between the respective tire changer tools (5, 6, 44) and the tire during the assembling or the disassembling of the tire onto the wheel rim or from the wheel rim, and elastic properties in the at least one unbalance measuring direction (12, 12a, 12b);
- tool supporting means (7) support the tire changer tools (5, 6, 44) on the machine frame (2) within said force acting range (13) which is arranged outside of a spatial unbalance measuring area within which the measuring directions (12, 12a, 12b) of the unbalance measuring means (3, 4) extend.

2. The apparatus according to claim 1, wherein the unbalance measuring directions (12a, 12b) extend within a angle of 80° to 100° with respect to the force acting range (13) of the tire changer tools (5, 6 and 44).

3. The apparatus according to claim 1 or 2, wherein a longitudinal axis (25) of the spindle shaft (1) extends within said spatial unbalance measuring area.

4. The apparatus according to one of the claims 1 to 3, wherein the spindle supporting means (10) include spring elements (14, 15; 53, 55) connected with their one ends to the machine frame (2) and with their other ends with a spindle bearing (18) in which the spindle shaft (1) is placed rotatably.

5. The apparatus according to one of the claims 1 to 4, wherein the spindle supporting means (10) include spring elements (14, 15) and the directions (13) of the forces applied by the tire changer tools (5, 6, 44) extend substantially parallel to the surfaces of the spring elements (14, 15).

6. The apparatus according to one of the claims 1 to 5, wherein the unbalance measuring means (3, 4) has at least one unbalance measuring direction (12a) intersecting the shaft axis (25).

7. The apparatus according to one of the claims 1 to 3, wherein the unbalance measuring means (3, 4) has unbalance measuring directions (12a, 12b) lying on the same plane.

8. The apparatus according to claim 7, wherein the unbalance measuring directions (12a, 12b) extend substantially parallel or substantially perpendicular to each other.

9. The apparatus according to one of the claims 1 to 8, wherein the spindle bearing (18) is pivotally supported about a pivot axis (51) extending perpendicular with respect to the shaft axis (25) on a second bearing (52) which is supported via springs (55) on the machine frame (2), and wherein one force transducer (3) is placed between the second bearing (52) and the machine frame (2) and another force transducer (4) is placed between the spindle bearing (18) and the second bearing (52).

10. The apparatus according to any one of the claims 1 to 8, wherein the surfaces of the flat spring elements (14, 15) extend parallel to each other and parallel to the shaft axis (25).

11. Apparatus according to any one of the claims 1 to 6, wherein the spindle shaft (1) is supported on the machine frame (2) via force transducers (3, 4) which measure the forces created by an unbalance of the tire/rim assembly (8, 9) or by the wheel rim (9).

## Patentansprüche

1. Vorrichtung zum Instandhalten von Fahrzeugrädern, die eine Radauswuchtvorrichtung und eine Reifenwechselvorrichtung aufweist, enthaltend:
- eine Spindelwelle (1), die drehbar an einem Maschinenrahmen (2) gelagert ist,
wobei die Spindelwelle (1) eingerichtet ist, eine Reifenfelge-Anordnung oder eine Radfelge eines Fahrzeugrades auf ihr zu montieren oder von ihr zu demontieren;
- Unwuchterfassungsmittel (3, 4), die mit der Spindelwelle (1) wirkverbunden sind,
wobei die Unwuchterfassungsmittel (3, 4) zumindest eine Unwuchterfassungsrichtung (12, 12a, 12b) aufweisen, in welcher durch eine Unwucht der Reifenfelge-Anordnung (8, 9) oder durch die Radfelge (9) hervorgerufene Kräfte erfasst werden;
- Reifenwechselwerkzeuge (5, 6 und 44), die an dem Maschinenrahmen (2) befestigt und angeordnet sind, um einen Reifen auf eine Felge zu montieren und um den Reifen von der Felge zu demontieren, wobei die Felge auf der Spindelwelle (1) montiert ist;
- Antriebmittel, die eingerichtet sind, die Spindelwelle (1) innerhalb eines Drehzahl- und Drehmomentbereiches anzutreiben, um den Reifen zu montieren und zu demontieren oder um durch eine Unwucht der Reifenfelge-Anordnung oder der Radfelge hervorgerufene Kräfte zu erfassen;
**gekennzeichnet durch**
- Spindellagerungsmittel (10), die die Spindelwelle (1) in dem Maschinenrahmen (2) lagern und starre Eigenschaften in einem Kraftwirkungsbereich (13), innerhalb dessen Kräfte zwischen den jeweiligen Reifenwechselwerkzeugen (5, 6, 44) und dem Reifen während dem Montieren des Reifens auf die Radfelge oder dem Demontieren des Reifens von der Radfelge hervorgerufen werden, und elastische Eigenschaften in der zumindest einen Unwuchterfassungsrichtung (12, 12a, 12b) aufweisen;
- Werkzeughaltemittel (7), die die Reifenwechselwerkzeuge (5, 6, 44) an den Maschinenrahmen (2) innerhalb des Kraftwirkungsbereiches (13) halten, der außerhalb eines räumlichen Unwuchterfassungsbereiches angeordnet ist, innerhalb dessen sich die Erfassungsrichtungen (12, 12a, 12b) der Unwuchterfassungsmittel (3, 4) erstrecken.

2. Vorrichtung nach Anspruch 1, wobei sich die Unwuchterfassungsrichtungen (12a, 12b) innerhalb eines Winkels von 80° bis 100°, bezogen auf den Kraftwirkungsbereich (13) der Reifenwechselwerkzeuge (5, 6 und 44), erstrecken.

3. Vorrichtung nach Anspruch 1 oder 2, wobei sich eine Längsachse (25) der Spindelwelle (1) innerhalb des räumlichen Unwuchterfassungsbereiches erstreckt.

4. Vorrichtung nach einem der Ansprüche 1 bis 3, wobei die Spindellagerungsmittel (10) Federelemente (14, 15; 53, 55) enthalten, die mit ihren einen Enden mit dem Maschinenrahmen (2) und mit ihren anderen Enden mit einer Spindellagerung (18), in welcher die Spindelwelle (1) drehbar angeordnet ist, verbunden sind.

5. Vorrichtung nach einem der Ansprüche 1 bis 4, wobei die Spindellagerungsmittel (10) Federelemente (14, 15) enthalten und sich die Richtungen (13) der durch die Reifenwechselwerkzeuge (5, 6, 44) hervorgerufenen Kräfte im Wesentlichen parallel zu den Oberflächen der Federelemente (14, 15) erstrecken.

6. Vorrichtung nach einem der Ansprüche 1 bis 5, wobei die Unwuchterfassungsmittel (3, 4) zumindest eine die Wellenachse (25) schneidende Unwuchterfassungsrichtung (12a) aufweisen.

7. Vorrichtung nach einem der Ansprüche 1 bis 3, wobei die Unwuchterfassungsmittel (3, 4) Unwuchterfassungsrichtungen (12a, 12b) aufweisen, die in derselben Ebene liegen.

8. Vorrichtung nach Anspruch 7, wobei sich die Unwuchterfassungsrichtungen (12a, 12b) im Wesentlichen parallel oder im Wesentlichen senkrecht zueinander erstrecken.

9. Vorrichtung nach einem der Ansprüche 1 bis 8, wobei die Spindellagerung (18) schwenkbar um eine Schwenkachse (51) gelagert sind, die sich senkrecht, bezogen auf die Wellenachse (25), in einem zweiten Lager (52) erstreckt, welches über Federn (55) an dem Maschinenrahmen (2) gehalten ist; und wobei eine Krafterfassungseinheit (3) zwischen dem zweiten Lager (52) und dem Maschinenrahmen (2) angeordnet ist und eine weitere Krafterfassungseinheit (4) zwischen der Spindellagerung (18) und dem zweiten Lager (52) angeordnet ist.

10. Vorrichtung nach einem der Ansprüche 1 bis 8, wobei sich die Oberflächen der flachen Federelemente (14, 15) parallel zueinander und parallel zu der Wellenachse (25) erstrecken.

11. Vorrichtung nach einem der Ansprüche 1 bis 6, wobei die Spindelwelle (1) an dem Maschinenrahmen (2) über Krafterfassungseinheiten (3, 4) gelagert ist, welche die durch eine Unwucht der Reifenfelge-Anordnung (8, 9) oder durch die Radfelge (9) hervorgerufenen Kräfte erfassen.

## Revendications

1. Installation d'entretien de roues de véhicule ayant un dispositif d'équilibrage de roue et un dispositif de changement de pneumatique, comprenant :
- un arbre (1) formant broche supporté à rotation sur un bâti (2) de machine,
l'arbre (1) formant broche étant conçu pour y monter un ensemble pneumatique/jante ou une jante d'une roue de véhicule ou pour l'en démonter ;
- des moyens (3, 4) de mesure du balourd reliés fonctionnellement à l'arbre (1) formant broche,
les moyens (3, 4) de mesure du balourd ayant au moins une direction (12, 12a, 12b) de mesure du balourd, dans laquelle des forces créées par un balourd de l'ensemble (8, 9) pneumatique/jante ou par la jante (9) de roue sont détectées ;
- des outils (5, 6 et 44) de changeur de pneumatique supportés sur le bâti (2) de la machine et agencés pour assembler un pneumatique sur une jante et pour désassembler le pneumatique de la jante, la jante étant montée sur l'arbre (1) formant broche ;
- des moyens d'entraînement conçus pour entraîner l'arbre (1) formant broche dans une plage de vitesse de rotation et de couple adaptés à l'assemblage et au désassemblage du pneumatique ou à la mesure de forces créées par un balourd de l'ensemble pneumatique/jante ou de la jante de roue ;
**caractérisée par**
- des moyens (10) supportant l'arbre (1) formant broche sur le bâti (2) de la machine et ayant des propriétés rigides dans une plage (13) d'action des forces, dans laquelle des forces sont créées entre les outils (5, 6, 44) respectifs du changeur de pneumatique et le pneumatique pendant l'assemblage du pneumatique sur la jante de roue ou pendant le désassemblage du pneumatique de la jante de roue et des propriétés élastiques dans la au moins une direction (12, 12a, 12b) de mesure du balourd ;
- des moyens (7) supportant les outils (5, 6, 44) du changeur de pneumatique sur le bâti (2) de la machine dans la plage (13) d'action des forces, qui sont disposés à l'extérieur d'une zone spatiale de mesure du balourd, dans laquelle s'étendent les directions (12, 12a, 12b) de mesure des moyens (3, 4) de mesure du balourd.

2. Installation suivant la revendication 1, dans laquelle les directions (12a, 12b) de mesure du balourd font un angle de 80 ° à 100 ° avec la plage (13) d'action des forces des outils (5, 6 et 44) du changeur de pneumatique.

3. Installation suivant la revendication 1 ou 2, dans laquelle un axe (25) longitudinal de l'arbre (1) formant broche s'étend dans la zone spatiale de mesure du balourd.

4. Installation suivant l'une des revendications 1 à 3, dans laquelle les moyens (10) supportant la broche comprennent des éléments (14, 15; 53, 55) de ressort reliés par l'une de leurs extrémités au bâti (2) de la machine et par leurs autres extrémités à un palier (18) de broche, dans lequel l'arbre (1) formant broche est monté à rotation.

5. Installation suivant l'une des revendications 1 à 4, dans laquelle les moyens (10) supportant la broche comprennent des éléments (14, 15) de ressort et les directions (13) des forces appliquées par les outils (5, 6, 44) du changeur de pneumatique s'étendent sensiblement parallèlement aux surfaces des éléments (14, 15) de ressort.

6. Installation suivant l'une des revendications 1 à 5, dans laquelle les moyens (3, 4) de mesure du balourd ont au moins une direction (12a) de mesure du balourd coupant l'axe (25) de l'arbre.

7. Installation suivant l'une des revendications 1 à 3, dans laquelle les moyens (3, 4) de mesure du balourd ont des directions (12a, 12b) de mesure du balourd dans le même plan.

8. Installation suivant la revendication 7, dans laquelle les directions (12a, 12b) de mesure du balourd sont sensiblement parallèles ou sensiblement perpendiculaires l'une à l'autre.

9. Installation suivant l'une des revendications 1 à 8, dans laquelle le palier (18) de la broche est supporté à pivotement autour d'un axe (51) de pivot s'étend perpendiculairement à l'axe (25) de l'arbre sur un deuxième palier (52), qui est supporté par l'intermédiaire de ressorts (55) sur le bâti (2) de la machine, et un transducteur (3) de force est placé entre le deuxième palier (52) et le bâti (2) de la machine et un autre transducteur (4) de force est placé entre le palier (18) de la broche et le deuxième palier (52).

10. Installation suivant l'une des revendications 1 à 8, dans laquelle les surfaces des éléments (14, 15) plats de ressort sont parallèles l'une à l'autre et parallèles à l'axe (25) de l'arbre.

11. Installation suivant l'une des revendications 1 à 6, dans laquelle l'arbre (1) formant broche est supporté sur le bâti (2) de la machine par l'intermédiaire de transducteurs (3, 4) de force, qui mesurent les forces créées par un balourd de l'ensemble (8, 9) pneumatique/jante ou par la jante (9) de roue.
